# NEUE EUROPÄISCHE PATENTSCHRIFT

(11) **EP 1 714 859 B2**
(45) Veröffentlichungstag und Bekanntmachung des Hinweises auf die Entscheidung über den Einspruch: **18.04.2012**
(45) Hinweis auf die Patenterteilung: 13.08.2008
(21) Anmeldenummer: 05008423.5
(22) Anmeldetag: 18.04.2005
(51) Int. Cl.: B62D 59/04

(54) **Kompakter Hilfsantrieb für einen Anhänger**
Compact auxiliary drive for a trailer
Entraînement auxiliaire compact pour remorque

(43) Veröffentlichungstag der Anmeldung: 25.10.2006
(73) Patentinhaber: Truma Gerätetechnik GmbH & Co. KG, 85640 Putzbrunn (DE)
(72) Erfinder: Wickelmaier, Peter, 81671 München (DE); Müller, Jörg, 86916 Kaufering (DE)
(74) Vertreter: Müller - Hoffmann & Partner

(56) Entgegenhaltungen:
- EP-A- 0 827 898
- EP-A- 1 203 713
- EP-A- 1 394 024
- EP-A1- 1 447 312
- EP-A2- 0 403 978
- EP-A2- 1 842 754
- DE-A1- 2 711 214
- DE-A1- 19 635 808
- GB-A- 2 371 278
- US-A- 3 826 324

## Beschreibung

Die Erfindung betrifft gemäß dem Oberbegriff von Patentanspruch 1 einen Hilfsantrieb für einen Anhänger.

Anhänger (Fahrzeuganhänger) werden üblicherweise von Zugmaschinen gezogen. So ist es bekannt, dass ein PKW einen Wohnwagen ziehen kann. Wenn der Anhänger von der Zugmaschine abgenommen ist, wird er üblicherweise von Hand in die endgültige Position geschoben. Jedoch werden heutzutage zunehmend Anhänger im Wohnwagenbereich angeboten, die aufgrund ihrer Größe und damit ihres Gewichts nur noch unter Mühen von Hand verschoben werden können. Daher wurden Hilfsantriebe entwickelt, die es ermöglichen, auch ohne Zugmaschine einen Anhänger mit Motorunterstützung zu verschieben bzw. zu drehen.

Aus der EP 0 827 898 A1 ist ein Hilfsantrieb für einen Anhänger bekannt, bei dem ein Rahmenteil fest mit dem Fahrgestell des Anhängers verbunden ist. Der Rahmenteil trägt einen relativ zu dem Rahmenteil bewegbaren Träger, von dem wiederum ein Antriebsmotor mit einer von dem Antriebsmotor antreibbaren Antriebsrolle gehalten wird. Weiterhin ist ein Bewegungsmechanismus vorgesehen, zum Bewegen des Trägers zwischen einer Ruheposition, in der die Antriebsrolle von einem Reifen des Anhängers getrennt ist, und einer Antriebsposition, in der die Antriebsrolle gegen den Reifen des Trägers gedrückt wird. Die Änderung der Position des Trägers erfolgt manuell mit Hilfe eines Hebels, der an dem Träger angesetzt werden kann.

In der EP 1 203 713 A1 wird ein anderer Hilfsantrieb für einen Anhänger beschrieben, der jedoch nach dem gleichen Prinzip arbeitet. Während allerdings die Antriebsrolle bei dem Hilfsantrieb gemäß EP 0 827 898 A1 um eine horizontale, zur Radachse parallele Achse verschwenkt wird, ist bei dem Hilfsantrieb gemäß EP 1 203 713 A1 eine vertikale Schwenkachse vorgesehen.

Die bekannten Hilfsantriebe sind relativ sperrig und weisen aufgrund ihrer zerklüfteten Struktur die Neigung auf, stark zu verschmutzen. Durch eingeklemmte Steine kann dabei sogar die Funktion beeinträchtigt werden. Die zerklüftete Struktur erfordert zudem einen sehr robusten und damit schweren Aufbau.

Aus der US 3,826,324 ist ein gattungsgemäßer Hilfsantrieb für einen Anhänger bekannt, bei dem eine Querstange in einem Schwenklager schwenkbar beweglich gehalten ist. Auf der Querstange ist ein Antriebsmotor und ein Getriebe gehalten, über das eine Antriebsrolle für ein Rad des Anhängers antreibbar ist. Die Querstange kann mit dem Antriebsmotor und dem Getreibe zwischen einer Ruheposition, in der die Antriebsrolle von dem Rad des Anhängers getrennt ist, und einer Antriebsposition, in der die Antriebsrolle gegen das Rad des Anhängers gedrückt wird, bewegt werden.

Der Erfindung liegt die Aufgabe zugrunde, einen Hilfsantrieb für einen Anhänger anzugeben, der kompakt aufgebaut ist, so dass er ein geringes Baugewicht und eine reduzierte Verschmutzungsneigung aufweist.

Die Aufgabe wird erfindungsgemäß durch einen Hilfsantrieb für einen Anhänger gemäß Patentanspruch 1 gelöst.

Erfindungsgemäß wird ein Hilfsantrieb angegeben, mit einer starr mit einem Fahrgestell des Anhängers verbindbaren Halterung, einem relativ zu der Halterung bewegbaren Träger, einem von dem Träger gehaltenen Antriebsmotor, einer an dem Träger gelagerten, von dem Antriebsmotor über ein Getriebe antreibbaren Antriebsrolle und mit einem Bewegungsmechanismus zum Bewegen des Trägers zwischen einer Ruheposition, in der die Antriebsrolle von einem Rad des Anhängers getrennt ist, und einer Antriebsposition, in der die Antriebsrolle gegen das Rad des Anhängers gedrückt wird. Der erfindungsgemäße Hilfsantrieb ist dadurch gekennzeichnet, dass der Träger ein in den Träger integriertes Getriebegehäuse aufweist, in dem das Getriebe untergebracht ist, und dass der Träger derart gestaltet ist, dass ein Kraftfluss, der durch eine auf die Antriebsrolle in der Antriebsposition wirkende Betriebskraft hervorgerufen wird und zu der Halterung verläuft, im Wesentlichen vollständig über das Getriebegehäuse geführt wird.

Der Träger stellt somit erfindungsgemäß unter anderem auch das Getriebegehäuse dar, das wiederum umgekehrt vollständig in den Träger integriert ist. Während beim Stand der Technik der Träger das separat vorgesehene Getriebegehäuse halten musste, übernimmt das Getriebegehäuse jetzt selbst die Tragfunktion, indem zumindest ein wesentlicher Teil des Kraftflusses über das Getriebegehäuse geführt wird. Dies ermöglicht einen sehr kompakten Aufbau des Trägers, bei dem das Getriebegehäuse nicht mehr separat gehalten werden muss.

Besonders vorteilhaft ist es, wenn der Träger einen Basisbereich aufweist. Der Basisbereich berührt die Halterung und wird in der Halterung bewegbar geführt. Der Basisbereich trägt das ebenfalls zum Träger gehörige Getriebegehäuse. Damit besteht der Träger im Wesentlichen aus den beiden Hauptkomponenten Basisbereich und Getriebegehäuse. Je nach Bauraum ist der Basisbereich über, unter oder neben dem Getriebegehäuse vorgesehen.

Bei einer besonders vorteilhaften Ausführungsform der Erfindung sind die Bauelemente des Hilfsantriebs derart angeordnet, dass der durch die Betriebskraft hervorgerufene Kraftfluss die Bauelemente in folgender Reihenfolge durchfließt: Antriebsrolle, Antriebswelle (die die Antriebsrolle trägt), ein oder mehrere Lager (die die Antriebswelle in dem Getriebegehäuse lagern), Getriebegehäuse, Basisbereich und Halterung. Der Kraftfluss wird auf diese Weise auf kürzestmöglichem Weg von der gegen das Rad gedrückten und das Rad drehend antreibenden Antriebsrolle zu der Halterung geführt, wo der Kraftfluss über das Fahrgestell weitergeleitet wird.

Besonders vorteilhaft ist es, wenn die Antriebsrolle einseitig gelagert ist. Beim Stand der Technik wird die Antriebsrolle von der Antriebswelle gehalten, während die Antriebswelle wiederum an wenigstens zwei Lagerstellen gelagert ist. Wenn nun erfindungsgemäß die Antriebsrolle auf der Antriebswelle einseitig bzw. fliegend zu den wenigstens zwei Lagerstellen gelagert ist, bedeutet dies, dass die Antriebsrolle auf einem freien Wellenende der Antriebswelle sitzt und so sehr einfach montiert werden kann. Die beiden Lagerstellen lagern die Antriebswelle auf der von dem freien Wellenende abgewandten Seite.

Bei einer besonders vorteilhaften Ausführungsform der Erfindung wird der Antriebsmotor von dem Getriebegehäuse getragen. Dadurch ist es möglich, dass für den Antriebsmotor keine eigene Halterung vorgesehen werden muss. Vielmehr kann der Antriebsmotor direkt zum Beispiel über einen Motorflansch an dem Träger bzw. an dem Getriebegehäuse befestigt werden.

Weiterhin ist es vorteilhaft, wenn der Antriebsmotor durch eine ebenfalls an dem Getriebegehäuse befestigbare Abdeckung abdeckbar ist. Der Antriebsmotor kann so wirksam gegen Verschmutzung oder mechanische Einwirkung von außen geschützt werden.

Bei einer besonders vorteilhaften Ausgestaltung der Erfindung besteht der Träger im Wesentlichen aus zwei schalenartigen Gehäuseelementen, nämlich einer Hauptschale und einer Deckelschale. Selbstverständlich können noch weitere Elemente als Bestandteil dem Träger zugerechnet werden. Jedoch lassen sich der Basisbereich und das Getriebegehäuse des Trägers in sehr einfacher Weise durch die zwei Gehäuseelemente realisieren.

Dabei ist es besonders vorteilhaft, wenn eine Haupt-Trennebene zwischen den zwei Gehäuseelementen (bzw. zwischen der Hauptschale und der Deckelschale) senkrecht zu einer Drehachse der Antriebsrolle verläuft. Aufgrund der Restriktionen, die für den Einbau des Hilfsantriebs am Fahrgestell des Anhängers in der Nähe des anzutreibenden Rads oder der anzutreibenden Räder bestehen, ist im Regelfall nur ein kleiner Einbauraum vorhanden. Dieser erfordert unter Umständen einen rechtwinkligen Aufbau des Hilfsantriebs, nämlich insbesondere eine rechtwinklige Anordnung der Antriebsrolle und des Antriebsmotors zueinander. Wenn nun die Haupt-Trennebene senkrecht zu der Drehachse der Antriebsrolle verläuft, lässt sich der Antriebsmotor sehr einfach an dem Getriebegehäuse befestigen. Das durch die Haupt-Trennebene geteilte Getriebegehäuse ist leicht zu öffnen, um die Getriebekomponenten einzubauen bzw. zu warten.

Besonders vorteilhaft ist es, wenn der durch die Betriebskraft hervorgerufene Kraftfluss im Wesentlichen vollständig über wenigstens einen Teil der Gehäuseelemente geführt wird. Die Gehäuseelemente erfüllen somit eine Stützfunktion, die beim Stand der Technik durch zusätzliche Rippen oder Stege erfüllt wird. Auf diese Stege kann bei dem erfindungsgemäßen Hilfsantrieb verzichtet werden.

Vorzugsweise weist die Halterung zwei Wandelemente auf, zwischen denen der Träger bewegbar gehalten ist. Die Wandelemente flankieren den Träger, und zwar insbesondere den Basisbereich des Trägers, und gewährleisten eine gleichermaßen einfache wie zuverlässige Führung.

Vorzugsweise ist der Träger relativ zu der Halterung linear bewegbar. Jedoch sind auch andere Bewegungsmöglichkeiten denkbar, wie insbesondere ein Verschwenken des Trägers relativ zu der Halterung. Dabei kann es von Vorteil sein, wenn wenigstens eines der Wandelemente der Halterung eine Führungsnut aufweist, in der der Träger linear geführt wird. Auf diese Weise ist keine zusätzliche Führung des Trägers erforderlich.

Bei einer besonders vorteilhaften Ausführungsform der Erfindung weist der Bewegunsgmechanismus einen zwischen dem Träger und der Halterung wirkenden Exzenterhebel-Mechanismus, insbesondere einen Kniehebel-Mechanismus auf. Der Exzenterhebel-Mechanismus erlaubt ein einfaches mechanisches Bewegen des Trägers zwischen der Ruheposition und der Antriebsposition. Die Bewegungskraft wird dabei von einem Bediener, zum Beispiel mit Hilfe eines Stellhebels, aufgebracht.

Der Kniehebel-Mechanismus hat den weiteren Vorteil, dass er prinzipbedingt zwei definierte Endstellungen gewährleistet, die als Ruheposition und Antriebsposition des Trägers genutzt werden können.

Zur Unterstützung der Bewegung bzw. Fixierung der gewünschten Endstellungen ist es von besonderem Vorteil, wenn der Träger aus der Ruheposition in die Antriebsposition gegen die Wirkung einer Feder bewegbar ist, die zwischen dem Träger und der Halterung gespannt ist. Das Überwinden der Federkraft kann zudem die Wirkung des Kniehebel-Mechanismus unterstützen.

Besonders vorteilhaft ist es, dass der Träger eine integrierte Feder-Aufnahme zum im Wesentlichen vollständigen Aufnehmen der Feder aufweist. Die Feder lässt sich auf diese Weise in dem Träger unterbringen und wirkungsvoll vor äußeren Einwirkungen schützen. Dabei kann es von Vorteil sein, wenn die Feder-Aufnahme in einem oder beiden der Gehäuseelemente des Trägers ausgebildet ist.

Besonders zweckmäßig ist es dabei, die Feder-Aufnahme im Basisbereich des Trägers vorzusehen. Auf diese Weise lässt sich der von dem Basisbereich beanspruchte Bauraum gut ausnutzen, was das Erreichen des Zieles, einen besonders kompakten Hilfsantrieb zu schaffen, fördert.

Bei einer anderen Ausführungsform der Erfindung weist der Bewegungsmechanismus einen zwischen dem Träger und der Halterung wirkenden Spindelantrieb auf. Der Spindelantrieb kann mechanisch, zum Beispiel mit Hilfe einer Kurbel, betätigt werden. Alternativ dazu kann aber auch ein vorzugsweise elektrisch betriebener Spindelmotor zum Antreiben einer Bewegungsspindel vorgesehen sein.

Für den Spindelmotor ist es von besonderem Vorteil, wenn der Träger eine integrierte Spindelmotor-Aufnahme zum vollständigen Aufnehmen des Spindelmotors aufweist. Der Spindelmotor kann dadurch in den Träger integriert werden und vor äußeren Einwirkungen geschützt werden.

Vorzugsweise ist die Spindelmotor-Aufnahme in einem oder beiden der Gehäuseelemente des Trägers ausgebildet. Die Spindelmotor-Aufnahme sollte im Basisbereich des Trägers vorgesehen sein, um den dort vorhandenen Bauraum optimal auszunutzen.

Auf diese Weise ist es möglich, die Spindelmotor-Aufnahme vollständig gegenüber der Umgebung abzukapseln und den im Inneren des Trägers befindlichen Spindelmotor zu schützen.

Bei einer vorteilhaften Weiterentwicklung der Erfindung weist der Spindelantrieb eine Spindelmutter auf, in die die von dem Spindelmotor oder einer Kurbel durch den Bediener drehend angetriebene Bewegungsspindel einschraubbar ist und die von der Halterung gehalten ist. Die Halterung stellt mit der Spindelmutter somit das Gegenlager für die Bewegungsspindel dar.

Bei einer besonders vorteilhaften Ausführungsform der Erfindung ist der Spindelantrieb einschließlich der Spindelmutter und der Bewegungsspindel wenigstens in der Ruheposition vollständig gegenüber der Umgebung abgekapselt. Die Ruheposition des Hilfsantriebs entspricht einer Position, die der Hilfsantrieb einnimmt, wenn der Fahrzeuganhänger durch die Zugmaschine, zum Beispiel den Pkw, gezogen wird. Dabei werden oft hunderte von Kilometern unter widrigen Bedingungen zurückgelegt, die eine erhebliche Verschmutzung des Unterbodens des Anhängers und damit auch des Hilfsantriebs verursacht. Wenn nun in diesem Zustand, nämlich der Ruheposition des Hilfsantriebs, der Spindelantrieb gegenüber der Umgebung abgekapselt ist, sind die empfindlichen Bauteile und zum Beispiel die Gewindeflächen der Bewegungsspindel und der Spindelmutter vor äußeren Einwirkungen geschützt.

Es ist auch möglich, die vollständige Abkapselung des Spindelantriebs gegenüber der Umgebung zum Beispiel auch in der Antriebsposition beizubehalten. Da jedoch beim Betrieb des Hilfsantriebs in der Antriebsposition nur geringe Strecken zurückgelegt werden, ist eine starke Verschmutzung weniger zu erwarten.

Bei einer besonders vorteilhaften Weiterentwicklung der Erfindung ist die Bewegungsspindel in der Ruheposition derart weit in die Spindelmutter eingeschraubt, dass der Träger bzw. vom Träger getragene Bauelemente die Halterung bzw. von der Halterung gehaltene Bauelemente berühren. Auf diese Weise wird in der Ruheposition eine definierte Endstellung erreicht. Durch die Berührung von Träger und Halterung wird ein vorher vorhandener Zwischenraum geschlossen, in dem sich die Bewegungsspindel befinden kann. Mit der Berührung von Träger und Halter wird die im Inneren befindliche Bewegungsspindel gegenüber der Umgebung abgekapselt.

Dabei ist es von besonderem Vorteil, wenn die Spindelmutter auf einer der Einschraubseite für die Bewegungsspindel abgewandten Seite vollständig geschlossen, das heißt abgedichtet oder gekapselt ist. Zwischen dem Träger und der Halterung ist vorteilhafterweise eine wenigstens in der Ruheposition zwischen dem Träger und der Halterung wirksame Dichtung vorgesehen, die wenigstens in der Ruheposition die Bewegungsspindel gegenüber der Umgebung abkapselt. Die Dichtung ist von dem Träger oder von der Halterung gehalten und dichtet den Raum um die Bewegungsspindel ab, wenn sich der Träger der Halterung weit genug angenähert hat. Die Annäherung kann so weit gehen, dass der Träger die Halterung - wie oben erläutert - berührt und damit die Dichtung zur Wirkung kommt.

Bei einer besonders vorteilhaften Ausführungsform der Erfindung können im gleichen Bauraum wahlweise der Exzenterhebel-Mechanismus oder der Spindelantrieb vorgesehen sein, ohne dass die Gehäuseelemente des Trägers baulich verändert werden müssen. Dies ermöglicht es, den Träger einheitlich zu gestalten und je nach Bedarf mit einem geeigneten bzw. von einem Kunden gewünschten Bewegungsmechanismus - also zum Beispiel dem Exzenterhebel-Mechanismus oder dem Spindelantrieb - auszustatten. Wenigstens die Hauptkomponenten des Trägers müssen dazu nicht verändert werden. Gegebenenfalls können Hilfskomponenten wie Bolzen, Schrauben oder Kappen an den Hauptkomponenten des Trägers befestigt werden, um den Träger an den gewählten Bewegungsmechanismus anzupassen. Gleiches gilt entsprechend für die Halterung: Auch die Halterung muss bei dieser vorteilhaften Ausführungsform baulich nicht verändert werden. Es kann lediglich erforderlich sein, an der Stelle der Bewegungsspindel einen Bolzen vorzusehen, an dem zum Beispiel die Feder eingehängt werden kann.

In diesem Zusammenhang ist es von besonderem Vorteil, wenn die Feder-Aufnahme und die Spindelmotor-Aufnahme identisch sind und wahlweise für die Unterbringung der Feder oder des Spindelmotors im Träger nutzbar sind.

Diese und weitere Vorteile und Merkmale der Erfindung werden nachfolgend anhand von Beispielen unter Zuhilfenahme der begleitenden Figuren näher erläutert. Es zeigen:
- **Fig. 1**: einen erfindungsgemäßen Hilfsantrieb gemäß einer ersten Ausführungsform in Perspektivdarstellung;
- **Fig. 2a und 2b**: einen Teil des Hilfsantriebs mit geöffnetem Träger;
- **Fig. 3**: eine perspektivische Teildarstellung des Hilfsantriebs von Fig. 1;
- **Fig. 4a bis 4c**: Schnittdarstellungen des Hilfsantriebs von Fig. 1 in Ruheposition (Fig. 4a, Draufsicht; Fig. 4b, Seitenansicht) sowie in Antriebsposition (Fig. 4c, Draufsicht);
- **Fig. 5**: eine perspektivische Teildarstellung des Hilfsantriebs gemäß einer zweiten Ausführungsform der Erfindung;
- **Fig. 6a und 6b**: seitliche Schnittdarstellungen der zweiten Ausführungsform in unterschiedlichen Arbeitspositionen.

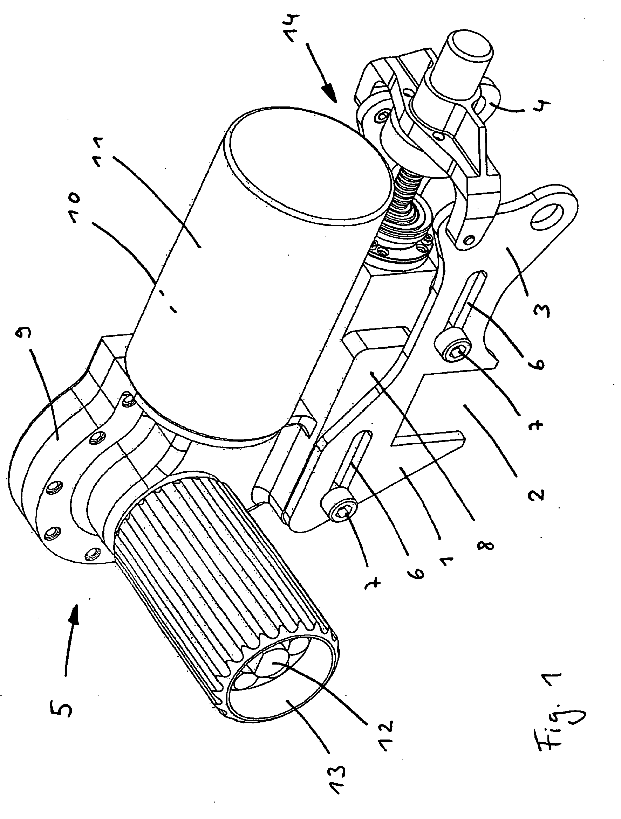

Fig. 1 zeigt eine Perspektivansicht einer ersten Ausführungsform des erfindungsgemäßen Hilfsantriebs für einen Fahrzeuganhänger.

Der Hilfsantrieb weist eine Halterung 1 auf, die mit einem nicht dargestellten Fahrgestell des Anhängers fest verbunden werden kann. Zu diesem Zweck weist die Halterung 1 eine Ausklinkung 2 auf, die auf ein Vierkantrohr aufgesetzt bzw. an einem Vierkantrohr festgeschweißt werden kann. Das Vierkantrohr wiederum wird mit dem Fahrgestell fest verbunden.

Die Halterung 1 besteht im Wesentlichen aus zwei blechförmigen Wandelementen 3, 4, die parallel zueinander auf dem nicht dargestellten Vierkantrohr befestigt sind.

Zwischen den Wandelementen 3, 4 der Halterung 1 ist ein Träger 5 linear bewegbar gehalten. Zu diesem Zweck sind in den Wandelementen 3, 4 Führungsnuten 6 vorgesehen, in denen mit dem Träger 5 verbundene Führungsbolzen 7 hin- und herbewegbar sind.

Der Träger 5 weist einen Basisbereich 8 und ein oberhalb des Basisbereichs 8 angeordnetes und von diesem getragenes Getriebegehäuse 9 auf. Der Basisbereich 8 berührt somit die Wandelemente 3, 4 der Halterung 1 und wird dadurch geführt. Der Basisbereich 8 ist mit dem Getriebegehäuse 9 zu dem kompakten Träger 5 also zu einer Einheit integriert.

An einer Seite des Getriebegehäuses 9 ist ein elektrischer Antriebsmotor 10 von dem Getriebegehäuse 9 gehalten. Der Antriebsmotor 10 ist in Fig. 1 durch eine Abdeckung 11 verdeckt und daher nicht sichtbar. Die Abdeckung 11 kann von dem Motorgehäuse des Antriebsmotors 10 gehalten werden. Sie kann aber auch an dem Getriebegehäuse 9 befestigt sein.

Eine Drehbewegung des Antriebsmotors 10 wird von einem in dem Getriebegehäuse 9 angeordneten Getriebe hinsichtlich Drehzahl und Achsrichtung gewandelt. Insbesondere wird die Drehzahl reduziert und die Drehbewegung um 90 Grad umgelenkt. Dementsprechend erstreckt sich rechtwinklig zu der Motorwelle des Antriebsmotors 10 aus dem Getriebegehäuse 9 eine Antriebswelle 12, auf der eine Antriebsrolle 13 befestigt ist. Die Antriebsrolle 13 treibt schließlich ein nicht dargestelltes Rad des Fahrzeuganhängers an. Zu diesem Zweck weist die Antriebsrolle 13 an ihrer Mantelfläche eine aufgeraute und/oder profilierte Oberfläche auf, um eine ausreichende Reibwirkung zwischen der Antriebsrolle 13 und dem anzutreibenden Rad zu erreichen.

Die Antriebsrolle 13 ist auf der Antriebswelle 12 einseitig gelagert. Das bedeutet, dass die Antriebsrolle 13 auf der Antriebswelle 12 in einem Bereich befestigt ist, der außerhalb eines zwischen zwei Lagerstellen liegenden Bereichs liegt, an dem die Antriebswelle 12 in dem Getriebegehäuse 9 gelagert ist. Auf diese Weise wird eine fliegende Lagerung realisiert. Die Antriebswelle 12 weist dementsprechend ein freies Wellenende auf, auf das die Antriebsrolle 13 in der in Fig. 1 gezeigten Weise axial aufschiebbar ist.

Der Träger 5 ist mit Hilfe eines Bewegungsmechanismus relativ zu der Halterung 1 bewegbar. Bei der in Fig. 1 gezeigten Ausführungsform ist der Bewegungsmechanismus als Spindelantrieb 14 realisiert, der später noch erläutert wird.

Mit Hilfe des Bewegungsmechanismus ist es möglich, den Träger 5 zwischen einer in Fig. 1 gezeigten vorderen Position (Antriebsposition), in der die Antriebsrolle 13 gegen das Rad des Anhängers gedrückt wird, und einer zurückgeschobenen Position (Ruheposition), in der die Antriebsrolle 13 von dem Rad des Anhängers getrennt ist, zu verschieben. Die Führungsbolzen 7 nehmen entsprechend eine vordere (Fig. 1) bzw. hintere Stellung in den zugehörigen Führungsnuten 6 ein.

Der Träger 5 ist derart gestaltet, dass ein Kraftfluss, der durch eine auf die Antriebsrolle 13 in der Antriebsposition wirkende Betriebskraft hervorgerufen wird und zu der Halterung 1 verläuft, im Wesentlichen vollständig über das Getriebegehäuse 9 geführt wird. Das bedeutet, dass der Kraftfluss von der Antriebsrolle 13 auf die Antriebswelle 12 übertragen wird, die in dem Getriebegehäuse 9 gelagert ist. Das Getriebegehäuse 9 nimmt die auf die Antriebsrolle 13 wirkenden Kräfte auf und leitet sie weiter in den Basisbereich 8, von wo aus die Kräfte schließlich auf die Halterung 1 übertragen werden. Dadurch, dass der Kraftfluss vollständig über das Getriebegehäuse geführt wird, sind keine weiteren Stützelemente, wie Rippen, Stege oder Stützbleche erforderlich. Vielmehr erfüllt das Getriebegehäuse außer seiner Funktion als "Getriebegehäuse" selbst auch noch die Funktion des Tragens der Antriebswelle 12 und der Antriebsrolle 13. Dies ermöglicht einen besonders kompakten, integrierten Aufbau, im Unterschied zu den aus dem Stand der Technik bekannten Hilfsantrieben.

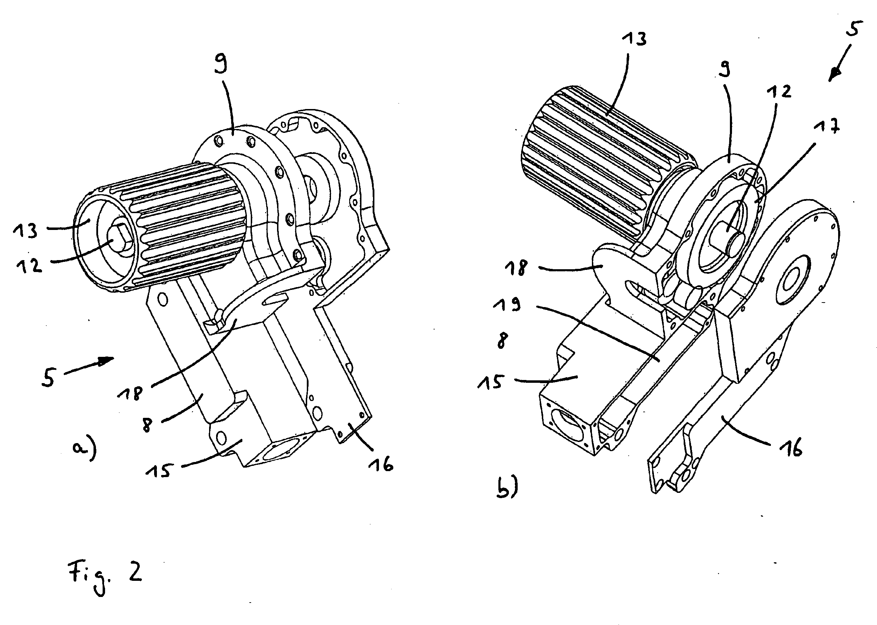

Der Träger 5 weist darüber hinaus einen sehr vorteilhaften zweiteiligen Aufbau auf, wie insbesondere aus Fig. 2 ersichtlich. Fig. 2 zeigt den Träger 5 zusammen mit der Antriebswelle 12 und der Antriebsrolle 13 aus zwei verschiedenen Perspektivansichten (Fig. 2a und 2b).

Der Träger 5 besteht im Wesentlichen aus zwei schalenartigen Gehäuseelementen, nämlich einer Hauptschale 15 und einer Deckelschale 16. Die beiden Gehäuseelemente 15, 16 sind zum Beispiel als Gussteil hergestellt und integrieren zusammen verschiedene Funktionen. Insbesondere ermöglichen sie es dem Träger 5, die verschiedenen weiteren Bauelemente des Hilfsantriebs aufzunehmen und zu lagern, wie insbesondere ein in dem Getriebegehäuse 9 vorgesehenes Getriebe 17, den an einer Motorhalterung 18 befestigbaren Antriebsmotor 10 sowie den Bewegungsmechanismus, der wenigstens teilweise in einer später noch erläuterten, in der Hauptschale 15 ausgebildeten Aufnahme 19 untergebracht werden kann.

Dabei dient insbesondere die Hauptschale 15 zur Aufnahme und Lagerung der diversen Komponenten, während die Deckelschale 16 die in Fig. 2b sichtbare offene Seite der Hauptschale 15 verschließt und damit die Gesamtsteifigkeit des Trägers 5 deutlich erhöht sowie für einen ausreichenden Schutz der Komponenten sorgt. Zwischen der Hauptschale 15 und der Deckelschale 16 kann eine Dichtung vorgesehen sein, um das Eindringen von Schmutz und Feuchtigkeit zu vermeiden.

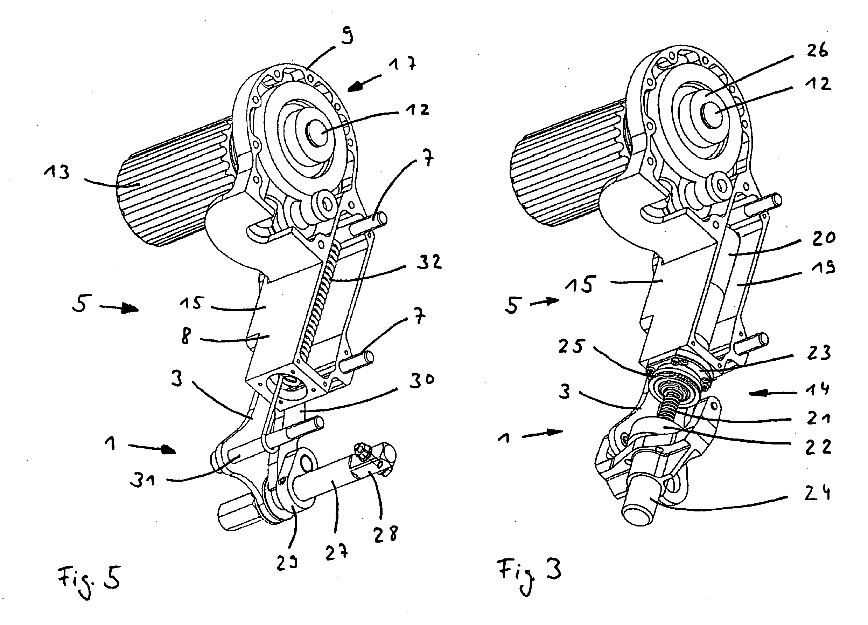

Fig. 3 zeigt die erste Ausführungsform der Erfindung in fragmentarischer Perspektivdarstellung. Insbesondere wurde der Antriebsmotor 10, die Deckelschale 16 und das Wandelement 4 weggelassen, um dafür zusätzliche Details erkennen zu können.

Als Bewegungsmechanismus dient der Spindelantrieb 14, der einen Spindelmotor 20, eine von dem Spindelmotor 20 drehend angetriebene Bewegungsspindel 21 sowie eine von der Halterung 1 gehaltene Spindelmutter 22, in die die Bewegungsspindel 21 einschraubbar ist, aufweist.

Der Spindelmotor 20 ist in der Aufnahme 19 des Trägers 5 eingebaut, die stirnseitig durch einen Deckel 23 verschlossen ist. Dementsprechend ist der Spindelmotor 20 bei geschlossenem Träger 5 vollständig gegenüber der Umgebung abgekapselt. Lediglich die Bewegungsspindel 21 liegt außen und kann so in die Spindelmutter 22 eingeschraubt werden.

Zum Ausgleich von Fluchtungsfehlern ist die Spindelmutter 22 an den Wandelementen 3, 4 der Halterung 1 verschwenkbar gehalten. Die Spindelmutter 22 stellt insoweit einen Bestandteil der Halterung 1 dar. Weiterhin ist die Spindelmutter 22 auf ihrer der Einschraubseite für die Bewegungsspindel 21 abgewandten Seite durch eine Kappe 24 verschlossen.

Die Fig. 3 zeigt den Träger in ausgefahrener Stellung, also in Antriebsposition. Wenn der Träger durch Drehen der Bewegungsspindel 21 zurückgefahren wird, ist es möglich, den Träger 5 so weit zurückzubewegen, dass der in Fig. 3 noch freiliegende Raum um die Bewegungsspindel 21 verschlossen wird, indem der Träger 5 gegen die Halterung 1 bzw. die Spindelmutter 22 anschlägt. Dadurch kann in der Ruheposition der Spindelantrieb 14 einschließlich der Spindelmutter 22 und der Bewegungsspindel 21 vollständig gegenüber der Umgebung abgekapselt werden. Der Träger 5 trägt einen Dichtring 25, der gegen die Spindelmutter 22 angedrückt wird und damit den in Fig. 3 offenliegenden Bereich des Spindelantriebs 14 vollständig gegenüber der Umgebung abkapselt.

Bei einer anderen, nicht dargestellten Ausführungsform der Erfindung ist zwischen dem Träger 5 und der Halterung 1 ein flexibler Balg angeordnet, der seine Länge in Abhängigkeit von der Relativstellung zwischen Träger 5 und Halterung 1 anpasst.

Auf der Antriebswelle 12 ist in Fig. 3 zudem ein Wälzlager 26 erkennbar.

Fig. 3 gewährt darüber hinaus einen Einblick in das Getriebe 17, das die Drehbewegung des Antriebsmotors zunächst über einen Schneckentrieb und dann über eine Stirnradstufe hinsichtlich der Drehzahl verringert und um 90 Grad umlenkt.

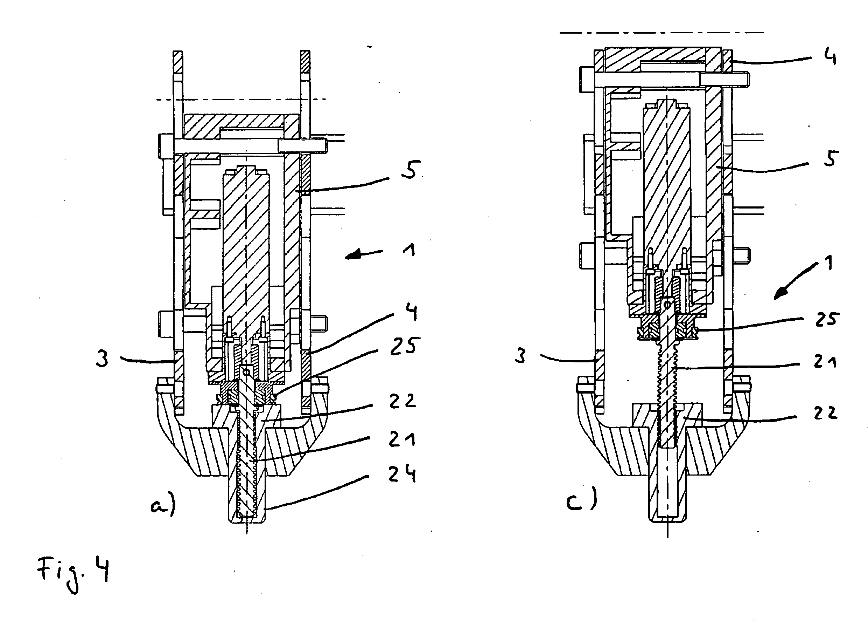

Das Abkapseln des Spindelantriebs 14 gegenüber der Umgebung wird anhand der Fig. 4a bis 4c verdeutlicht.

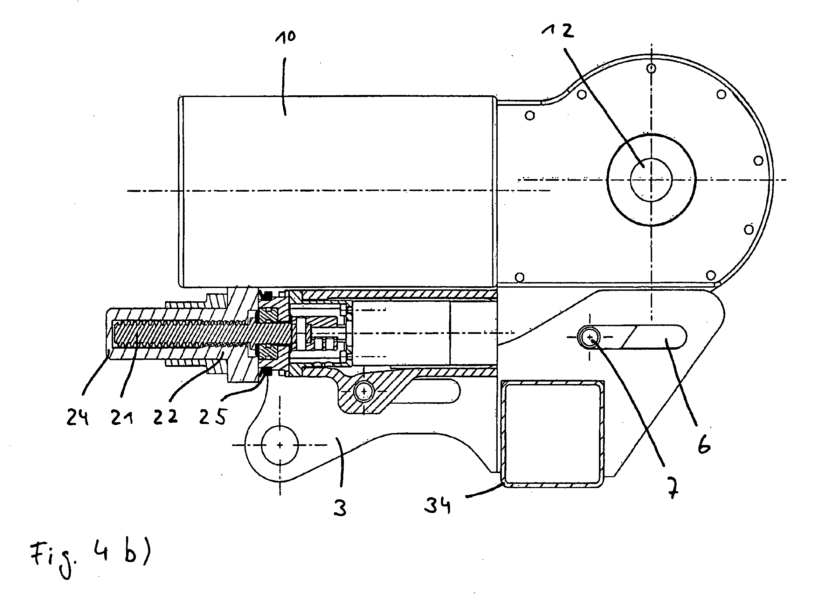

Fig. 4a zeigt einen Schnitt durch den Spindelantrieb 14 in der Draufsicht, wobei sich der Träger 5 in Ruheposition befindet. Fig. 4b ist die zugehörige Schnittdarstellung in Seitenansicht. Fig. 4c entspricht der Fig. 4a, jedoch mit dem Träger in der ausgefahrenen Antriebsposition.

In der Fig. 4a ist erkennbar, dass die Bewegungsspindel 21 vollständig in die Spindelmutter 22 eingeschraubt ist, so dass der Träger 5 so weit zurückgefahren ist, dass er gegen die Halterung 1 anschlägt. Dabei wird der Dichtring 25 gegen die Spindelmutter 22 angedrückt.

Da sich der Hilfsantrieb üblicherweise in dieser Stellung befindet, wenn der Fahrzeuganhänger von der Zugmaschine gezogen wird, ist der Spindelantrieb 14 wirkungsvoll gegenüber Einflüssen von außen geschützt. Die Bewegungsspindel 21 wird nur dann freigelegt, wenn der Hilfsantrieb genutzt wird und sich in Antriebsposition befindet. Dann ist jedoch das Risiko einer Verschmutzung deutlich geringer, nicht zuletzt wegen der vermutlich vergleichsweise kurzen Fahrwege und geringen Geschwindigkeiten.

Bei der Darstellung in Fig. 4c ist die Bewegungsspindel 21 weit aus der Spindelmutter 22 herausgeschraubt, so dass der Träger 5 nach vorne in die Antriebsposition verschoben wird. Dementsprechend verliert die Dichtung 25 ihre Wirkung und gibt den Zwischenraum um die Bewegungsspindel 21 frei.

Fig. 5 zeigt eine zweite Ausführungsform der Erfindung in fragmentarischer Perspektivdarstellung. Insbesondere wurde der Antriebsmotor 10, die Deckelschale 16 und das Wandelement 4 weggelassen, um dafür zusätzliche Details erkennen zu können.

Bei der zweiten Ausführungsform der Erfindung ist der Bewegungsmechanismus als Exzenterhebel-Mechanismus in Form eines Kniehebel-Mechanismus ausgeführt.

Zu diesem Zweck wird von der Halterung 1 eine Schaltwelle 27 schwenkbar gelagert, an deren einem Ende ein Vierkant 28 ausgebildet ist, auf den eine Schaltkurbel bzw. ein Schalthebel aufgesetzt werden kann.

Auf der Schaltwelle 27 ist ein Exzenter 29 befestigt, mit dem ein Ende eines Schiebehebels 30 gelenkig verbunden ist. Das andere Ende des Schiebehebels 30 ist an dem Basisbereich 8 des Trägers 5 gelenkig befestigt.

Zwischen dem vorderen Führungsbolzen 7 des Trägers 5 und einem von der Halterung 1 gehaltenen Haltebolzen 31 ist eine Zugfeder 32 gespannt.

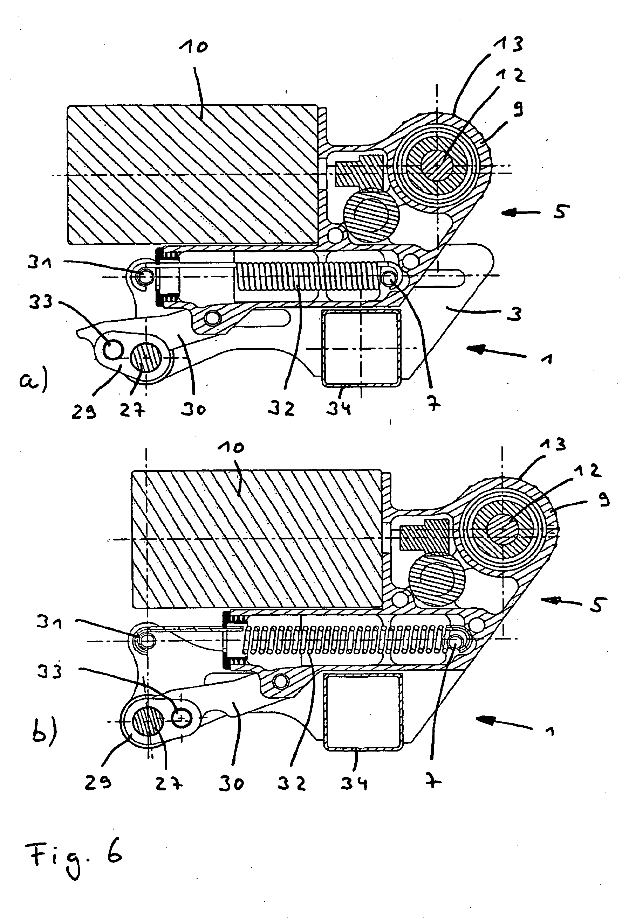

Die Funktion des Kniehebel-Mechanismus wird anhand der Fig. 6a und 6b erläutert.

Fig. 6a zeigt eine Längsschnittdarstellung der zweiten Ausführungsform der Erfindung, wobei sich der Träger 5 in Ruheposition befindet.

Dementsprechend ist die Schaltwelle 27 mit dem Exzenter 29 nach hinten verschwenkt, so dass ein Verbindungsgelenk 33 zwischen Exzenter 29 und Schiebehebel 30 ebenfalls hinten liegt.

Fig. 6b zeigt den Träger analog zu Fig. 6a in der nach vorne verschobenen Antriebsposition.

Hierzu wurde die Schaltwelle 27 mit dem Exzenter 29 um einen Schwenkwinkel von ca. 170 Grad verschwenkt. Dadurch wird das Verbindungsgelenk 33 und der Schiebehebel 30 ebenfalls nach vorne verlagert, so dass sie den Träger 5 nach vorne schieben. Durch diese Bewegung wird die Zugfeder 32 gespannt.

Durch den Exzenter 29 und den Schiebehebel 30 wird ein Kniehebel gebildet. Dadurch, dass der Exzenter 29 über den Totpunkt des Kniehebels hinaus verschwenkt wird (Fig. 6b), bewirkt die in der Antriebsposition gespannte Zugfeder 32 eine Stabilisierung der Stellung des Trägers 5. Der Träger 5 ist damit verriegelt und erzeugt eine ausreichend grolie Andrückkraft der Antriebsrolle 13 gegen das Rad. Nur durch Zurückschwenken des Exzenters 29 kann der Träger 5 in die Ruheposition zurückgeschoben werden.

In den Fig. 6a und 6b ist darüber hinaus ein Vierkantrohr 34 in Schnittdarstellung zu erkennen, das oben in Verbindung mit Fig. 1 (dort nicht gezeigt) beschrieben wurde und auf das die Halterung 1 aufgesetzt ist.

Ein Vergleich der Fig. 3 und 5 zeigt, dass der Träger 5, insbesondere dessen Hauptschale 15 unverändert geblieben ist. An der Halterung 1 können wahlweise der Haltebolzen 31 oder die Spindelmutter 22 befestigt werden. Damit ist es möglich, ohne Änderung der Gestaltung von Halterung 1 oder Träger 5 als Bewegungsmechanismus entweder den Kniehebel-Mechanismus oder den Spindelantrieb 14 einzubauen, je nach Ausstattungswunsch des Anwenders.

## Patentansprüche

1. Hilfsantrieb für einen Anhänger, mit
- einer starr mit einem Fahrgestell des Anhängers verbindbaren Halterung (1);
- einem relativ zu der Halterung (1) bewegbaren Träger (5);
- einem von dem Träger (5) gehaltenen Antriebsmotor (10);
- einer an dem Träger (5) gelagerten, von dem Antriebsmotor (10) über ein Getriebe (17) antreibbaren Antriebsrolle (13); und mit
- einem Bewegungsmechanismus (14; 29, 30) zum Bewegen des Trägers (5) zwischen einer Ruheposition, in der die Antriebsrolle (13) von einem Rad des Anhängers getrennt ist, und einer Antriebsposition, in der die Antriebsrolle (13) gegen das Rad des Anhängers gedrückt wird;
wobei
- der Träger (5) ein integriertes Getriebegehäuse (9) aufweist, in dem das Getriebe (17) untergebracht ist; und wobei
- der Träger (5) derart gestaltet ist, dass ein Kraftfluss, der durch eine auf die Antriebsrolle (13) in der Antriebsposition wirkende Betriebskraft hervorgerufen wird und zu der Halterung (1) verläuft, vollständig über das Getriebegehäuse (9) geführt wird;
**dadurch gekennzeichnet, dass** der Träger (5) relativ zu der Halterung (1) linear bewegbar ist.

2. Hilfsantrieb nach Anspruch 1, **dadurch gekennzeichnet, dass** der Träger (5) aufweist:
- einen Basisbereich (8), der die Halterung (1) berührt, in der Halterung (1) geführt wird und gegenüber der Halterung (1) bewegbar ist; und
- das Getriebegehäuse (9), das von dem Basisbereich (8) getragen wird.

3. Hilfsantrieb nach Anspruch 1 oder 2, **dadurch gekennzeichnet, dass** die Bauelemente des Hilfsantriebs derart angeordnet sind, dass der durch die Betriebskraft hervorgerufene Kraftfluss die Bauelemente in der folgenden Reihenfolge durchfließt:
- Antriebsrolle (13);
- Antriebswelle (12), die die Antriebsrolle (13) trägt;
- wenigstens ein Lager (26), das die Antriebswelle (12) in dem Getriebegehäuse (9) lagert;
- Getriebegehäuse (9);
- Basisbereich (8);
- Halterung (1).

4. Hilfsantrieb nach einem der Ansprüche 1 bis 3, **dadurch gekennzeichnet, dass** die Antriebsrolle (13) einseitig gelagert ist.

5. Hilfsantrieb nach einem der Ansprüche 3 oder 4, **dadurch gekennzeichnet, dass**
- die Antriebswelle (12) in dem Getriebegehäuse (9) an wenigstens zwei Lagerstellen (26) gelagert ist; und dass
- die Antriebsrolle (13) auf der Antriebswelle (12) in einem Bereich befestigt ist, der außerhalb eines zwischen den zwei Lagerstellen (26) liegenden Bereichs liegt.

6. Hilfsantrieb nach einem der Ansprüche 1 bis 5, **dadurch gekennzeichnet, dass** der Antriebsmotor (10) von dem Getriebegehäuse (9) getragen wird.

7. Hilfsantrieb nach einem der Ansprüche 1 bis 6, **dadurch gekennzeichnet, dass** der Antriebsmotor (10) durch eine an dem Getriebegehäuse (9) befestigbare Abdeckung (11) abdeckbar ist.

8. Hilfsantrieb nach einem der Ansprüche 1 bis 7, **dadurch gekennzeichnet, dass** der Träger (5) im Wesentlichen aus zwei schalenartigen Gehäuseelementen besteht, insbesondere einer Hauptschale (15) und einer Deckelschale (16).

9. Hilfsantrieb nach Anspruch 8, **dadurch gekennzeichnet, dass** eine Haupt-Trennebene zwischen den zwei Gehäuseelementen (15, 16) senkrecht zu einer Drehachse der Antriebsrolle (13) verläuft.

10. Hilfsantrieb nach Anspruch 8 oder 9, **dadurch gekennzeichnet, dass** der Kraftfluss im Wesentlichen vollständig über wenigstens einen Teil der Gehäuseelemente (15, 16) geführt wird.

11. Hilfsantrieb nach einem der Ansprüche 1 bis 10, **dadurch gekennzeichnet, dass** die Halterung (1) zwei Wandelemente (3, 4) aufweist, zwischen denen der Träger (5) bewegbar gehalten ist.

12. Hilfsantrieb nach Anspruche 11, **dadurch gekennzeichnet, dass** wenigstens eines der Wandelemente (3, 4) eine Führungsnut (6) aufweist, in der der Träger (5) linear geführt ist.

13. Hilfsantrieb nach einem der Ansprüche 1 bis 12, **dadurch gekennzeichnet, dass** der Bewegungsmechanismus einen zwischen dem Träger (5) und der Halterung (1) wirkenden Exzenterhebel-Mechanismus, insbesondere einen Kniehebel-Mechanismus (27 - 30) aufweist.

14. Hilfsantrieb nach Anspruch 13, **dadurch gekennzeichnet, dass** der Exzenterhebel-Mechanismus einen verschwenkbaren Exzenterhebel (29) aufweist, mit dem der Träger (5) relativ zu der Halterung (1) bewegbar ist.

15. Hilfsantrieb nach Anspruch 13 oder 14, **dadurch gekennzeichnet, dass** der Träger (5) aus der Ruheposition in die Antriebsposition gegen die Wirkung einer Feder (32) bewegbar ist, die zwischen dem Träger (5) und der Halterung (1) gespannt ist.

16. Hilfsantrieb nach Anspruch 15, **dadurch gekennzeichnet, dass** der Träger (5) eine integrierte Feder-Aufnahme (19) zum im Wesentlichen vollständigen Aufnehmen der Feder (32) aufweist.

17. Hilfsantrieb nach Anspruch 16, **dadurch gekennzeichnet, dass** die Feder-Aufnahme (19) in einem oder beiden der Gehäuseelemente (15, 16) des Trägers (5) ausgebildet ist.

18. Hilfsantrieb nach Anspruch 16 oder 17, **dadurch gekennzeichnet, dass** die Feder-Aufnahme (19) im Basisbereich (8) des Trägers (5) ausgebildet ist.

19. Hilfsantrieb nach einem der Ansprüche 1 bis 12, **dadurch gekennzeichnet, dass** der Bewegungsmechanismus einen zwischen dem Träger (5) und der Halterung (1) wirkenden Spindelantrieb (14) aufweist.

20. Hilfsantrieb nach Anspruch 19, **dadurch gekennzeichnet, dass**
- der Spindelantrieb (14) einen Spindelmotor (20) zum Antreiben einer Bewegungsspindel (21) aufweist; und dass
- der Träger (5) eine integrierte Spindelmotor-Aufnahme (19) zum vollständigen Aufnehmen des Spindelmotors (20) aufweist.

21. Hilfsantrieb nach Anspruch 20, **dadurch gekennzeichnet, dass** die Spindelmotor-Aufnahme (19) in einem oder beiden der Gehäuseelemente (15, 16) des Trägers (5) ausgebildet ist.

22. Hilfsantrieb nach Anspruch 19 oder 20, **dadurch gekennzeichnet, dass** die Spindelmotor-Aufnahme (19) im Basisbereich (8) des Trägers (5) ausgebildet ist.

23. Hilfsantrieb nach einem der Ansprüche 19 bis 22, **dadurch gekennzeichnet, dass** die Spindelmotor-Aufnahme (19) vollständig gegenüber der Umgebung abgekapselt ist.

24. Hilfsantrieb nach einem der Ansprüche 19 bis 23, **dadurch gekennzeichnet, dass** der Spindelantrieb (14) eine Spindelmutter (22) aufweist, in die die Bewegungsspindel (21) einschraubbar ist und die von der Halterung (1) gehalten ist.

25. Hilfsantrieb nach Anspruch 24, **dadurch gekennzeichnet, dass** der Spindelantrieb (14) einschließlich der Spindelmutter (22) und der Bewegungsspindel (21) wenigstens in der Ruheposition vollständig gegenüber der Umgebung abgekapselt ist.

26. Hilfsantrieb nach Anspruch 24 oder 25, **dadurch gekennzeichnet, dass** die Bewegungsspindel (21) in der Ruheposition derart in die Spindelmutter (22) eingeschraubt ist, dass wenigstens ein von dem Träger (5) getragenes Bauelement, insbesondere eine Dichtung (25), gegen ein von der Halterung (1) gehaltenes Bauelement, insbesondere gegen die Spindelmutter (22), anschlägt.

27. Hilfsantrieb nach einem der Ansprüche 24 bis 26, **dadurch gekennzeichnet, dass**
- die Spindelmutter (22) auf einer einer Einschraubseite für die Bewegungsspindel (21) abgewandten Seite geschlossen ist; und dass
- zwischen dem Träger (5) und der Halterung (1) eine wenigstens in der Ruheposition zwischen dem Träger (5) und der Halterung (1) wirksame Dichtung vorgesehen ist, die die Bewegungsspindel (21) gegenüber der Umgebung abkapselt.

28. Hilfsantrieb nach einem der Ansprüche 13 bis 27, **dadurch gekennzeichnet, dass** im gleichen Bauraum wahlweise der Exzenterhebel-Mechanismus (27 - 30) oder der Spindelantrieb (14) vorgesehen sein können, ohne dass die Gehäuseelemente (15, 16) des Trägers (5) baulich verändert werden müssen.

29. Hilfsantrieb nach einem der Ansprüche 16 bis 28, **dadurch gekennzeichnet, dass** die Feder-Aufnahme (19) und die Spindelmotor-Aufnahme (19) identisch sind und wahlweise für die Unterbringung der Feder (32) oder des Spindelmotors (20) nutzbar sind.

## Claims

1. Auxiliary drive for a trailer, with
- a mounting bracket (1) which can be rigidly attached to a trailer chassis;
- a carrier (5) which is movable relative to the mounting bracket (1);
- a drive motor (10) which is supported by the carrier (5);
- a drive roller (13) which is mounted on the carrier (5) and can be driven by the drive motor (10) through a gear unit (17); and with
- a movement mechanism (14; 29, 30) for moving the carrier (5) between a rest position in which the drive roller (13) is separated from a trailer wheel and a driving position in which the drive roller (13) is pressed against the trailer wheel;
where
- the carrier (5) has an integral gear case (9) which houses the gear unit (17); and where
- the design of the carrier (5) is such that a power flow brought about by a motive force which acts on the drive roller (13) in the driving position and moves towards the mounting bracket (1) is transmitted through the gear case (9) completely;
**characterised in that** the carrier (5) is movable in linear fashion relative to the mounting bracket (1).

2. Auxiliary drive as described in Claim 1, **characterised in that** the carrier (5) has:
- a base section (8) which is in contact with the mounting bracket (1), is carried in the mounting bracket (1) and is movable relative to the mounting bracket (1); and
- the gear case (9), which is supported by the base section (8).

3. Auxiliary drive as described in Claim 1 or 2, **characterised in that** the structural elements of the auxiliary drive are arranged in such a way that the power flow brought about by the motive force passes through the structural elements in the following sequence:
- drive roller (13);
- drive shaft (12) on which the drive roller (13) is mounted;
- at least one bearing (26) which supports the drive shaft (12) in the gear case (9);
- gear case (9);
- base section (8);
- mounting bracket (1).

4. Auxiliary drive as described in one of Claims 1 to 3, **characterised in that** the drive roller (13) is supported at one end only.

5. Auxiliary drive as described in one of Claims 3 or 4, **characterised in that**
- the drive shaft (12) is mounted in the gear case (9) at at least two bearing points (26); and that
- the drive roller (13) is fixed on the drive shaft (12) in an area which is outside an area between the two bearing points (26).

6. Auxiliary drive as described in one of Claims 1 to 5, **characterised in that** the drive motor (10) is mounted in front of the gear case (9).

7. Auxiliary drive as described in one of Claims 1 to 6, **characterised in that** the drive motor (10) is coverable with a cover (11) which can be attached to the gear case (9).

8. Auxiliary drive as described in one of Claims 1 to 7, **characterised in that** the carrier (5) consists essentially of two shell-type case elements, specifically a main shell (15) and a closing shell (16).

9. Auxiliary drive as described in Claim 8, **characterised in that** a main parting plane runs perpendicular to an axis of rotation of the drive roller (13) between the two case elements (15, 16).

10. Auxiliary drive as described in Claim 8 or 9, **characterised in that** the power flow is transmitted essentially completely over at least a part of the case elements (15, 16).

11. Auxiliary drive as described in one of Claims 1 to 10, **characterised in that** the mounting bracket (1) has two wall elements (3, 4) between which the carrier (5) is movably held.

12. Auxiliary drive as described in Claim 11, **characterised in that** at least one of the wall elements (3, 4) has a guide groove (6) in which the carrier (5) is carried in linear fashion.

13. Auxiliary drive as described in one of Claims 1 to 12, **characterised in that** the movement mechanism has an eccentric-lever mechanism which acts between the carrier (5) and the mounting bracket (1), especially a toggle-lever mechanism (27-30).

14. Auxiliary drive as described in Claim 13, **characterised in that** the eccentric-lever mechanism has a pivoting eccentric lever (29) with which the carrier (5) can be moved relative to the mounting bracket (1).

15. Auxiliary drive as described in Claim 13 or 14, **characterised in that** the carrier (5) can be moved from the rest position to the driving position against the action of a spring (32) which is held under tension between the carrier (5) and the mounting bracket (1).

16. Auxiliary drive as described in Claim 15, **characterised in that** the carrier (5) has an integral spring housing (19) to accommodate the spring (32) essentially completely.

17. Auxiliary drive as described in Claim 16, **characterised in that** the spring housing (19) is formed in one or both case elements (15, 16) of the carrier (5).

18. Auxiliary drive as described in Claim 16 or 17, **characterised in that** the spring housing (19) is formed in the base section (8) of the carrier (5).

19. Auxiliary drive as described in one of Claims 1 to 12, **characterised in that** the movement mechanism has a spindle drive (14) which acts between the carrier (5) and the mounting bracket (1).

20. Auxiliary drive as described in Claim 19, **characterised in that**
- the spindle drive (14) has a spindle motor (20) for driving a movement spindle (21); and that
- the carrier (5) has an integral spindle-motor mounting (19) to accommodate the spindle motor (20) completely.

21. Auxiliary drive as described in Claim 20, **characterised in that** the spindle-motor mounting (19) is formed in one or both of the case elements (15, 16) of the carrier (5).

22. Auxiliary drive as described in Claim 19 or 20, **characterised in that** the spindle-motor mounting (19) is formed in the base section (8) of the carrier (5).

23. Auxiliary drive as described in one of Claims 19 to 22, **characterised in that** the spindle-motor mounting (19) is completely sealed off from its surroundings.

24. Auxiliary drive as described in one of Claims 19 to 23, **characterised in that** the spindle drive (14) has a spindle nut (22) into which the movement spindle (21) can be screwed and which is held by the mounting bracket (1).

25. Auxiliary drive as described in Claim 24, **characterised in that** at least in the rest position the spindle drive (14) including the spindle nut (22) and movement spindle (21) is completely sealed off from its surroundings.

26. Auxiliary drive as described in Claim 24 or 25, **characterised in that** in the rest position the movement spindle (21) is screwed into the spindle nut (22) so that at least one structural element supported by the carrier (5), especially a seal (25), strikes against a structural element held by the mounting bracket (1), especially against the spindle nut (22).

27. Auxiliary drive as described in one of Claims 24 to 26, **characterised in that**
- the spindle nut (22) is closed on one side facing away from a screw-in side for the movement spindle (21); and that
- between the carrier (5) and mounting bracket (1) a seal is provided which is effective at least in the rest position between the carrier (5) and mounting bracket (1) and seals the movement spindle (21) off from its surroundings.

28. Auxiliary drive as described in one of Claims 13 to 27, **characterised in that** the eccentric-lever mechanism (27-30) or spindle drive (14) may optionally be provided in the same design space, without need for structural alteration of the case elements (15, 16) of the carrier (5).

29. Auxiliary drive as described in one of Claims 16 to 28, **characterised in that** the spring housing (19) and spindle-motor housing (19) are identical and may optionally be used for accommodating the spring (32) or spindle motor (20).

## Revendications

1. Entraînement auxiliaire pour une remorque, avec
- une fixation (1) apte à être reliée rigidement à un châssis de la remorque ;
- un support (5) mobile par rapport à la fixation (1) ;
- un moteur d'entraînement (10) tenu par le support (5) ;
- un rouleau d'entraînement (13) qui est monté sur le support (5) et qui est apte à être entraîné par le moteur d'entraînement (10) par l'intermédiaire d'une transmission (17) ; et
- un mécanisme de déplacement (14 ; 29, 30) pour déplacer le support (5) entre une position de repos dans laquelle le rouleau d'entraînement (13) est séparé d'une roue de la remorque, et une position d'entraînement dans laquelle ledit rouleau (13) est pressé contre la roue de la remorque ;
étant précisé que
- le support (5) comporte un carter de transmission intégré (9) dans lequel est logée la transmission (17) ; et que
- le support (5) est conçu pour qu'un flux de force qui est provoqué par une force motrice agissant sur le rouleau d'entraînement (13) dans la position d'entraînement et qui est dirigé vers la fixation (1) passe entièrement par le carter de transmission (9) ;
**caractérisé en ce que** le support (5) est mobile linéairement par rapport à la fixation (1).

2. Entraînement auxiliaire selon la revendication 1, **caractérisé en ce que** le support (5) comporte :
- une zone de base (8) qui touche la fixation (1), qui est guidée dans ladite fixation (1) et qui est mobile par rapport à celle-ci ; et
- le carter de transmission (9) qui est porté par la zone de base (8).

3. Entraînement selon la revendication 1 ou 2, **caractérisé en ce que** ses éléments de construction sont disposés de telle sorte que le flux de force provoqué par la force motrice traverse les éléments de construction dans l'ordre suivant :
- rouleau d'entraînement (13) ;
- arbre d'entraînement (12) qui porte le rouleau d'entraînement (13) ;
- au moins un palier (26) sur lequel l'arbre d'entraînement (12) est monté dans le carter de transmission (9) ;
- carter de transmission (9) ;
- zone de base (8) ;
- fixation (1) ;

4. Entraînement auxiliaire selon l'une des revendications 1 à 3, **caractérisé en ce que** le rouleau d'entraînement (13) est monté unilatéralement.

5. Entraînement selon la revendication 3 ou 4, **caractérisé en ce que**
- l'arbre d'entraînement (12) est monté dans le carter de transmission (9) sur au moins deux points d'appui (26) ;
- et **en ce que** le rouleau d'entraînement (13) est fixé sur l'arbre d'entraînement (12) dans une zone qui se trouve à l'extérieur d'une zone située entre les deux points d'appui (26).

6. Entraînement auxiliaire selon l'une des revendications 1 à 5, **caractérisé en ce que** le moteur d'entraînement (10) est porté par le carter de transmission (9).

7. Entraînement auxiliaire selon l'une des revendications 1 à 6, **caractérisé en ce que** le moteur d'entraînement (10) est apte à être couvert par un recouvrement (11) apte à être fixé au carter de transmission (9).

8. Entraînement auxiliaire selon l'une des revendications 1 à 7, **caractérisé en ce que** le support (5) se compose essentiellement de deux éléments de carter en forme de coques, en particulier une coque principale (15) et une coque formant couvercle (16).

9. Entraînement auxiliaire selon la revendication 8, **caractérisé en ce qu'**un plan de séparation principal entre les deux éléments de carter (15, 16) est perpendiculaire à un axe de rotation du rouleau d'entraînement (13).

10. Entraînement auxiliaire selon la revendication 8 ou 9, **caractérisé en ce que** le flux de force passe quasiment entièrement par une partie au moins des éléments de carter (15, 16).

11. Entraînement auxiliaire selon l'une des revendications 1 à 10, **caractérisé en ce que** la fixation (1) comporte deux éléments de paroi (3, 4) entre lesquels le support (5) est fixé, mobile.

12. Entraînement auxiliaire selon la revendication 11, **caractérisé en ce que** l'un au moins des éléments de paroi (3, 4) présente une rainure de guidage (6) dans laquelle le support (5) est guidé linéairement.

13. Entraînement auxiliaire selon l'une des revendications 1 à 12, **caractérisé en ce que** le mécanisme de déplacement comporte un mécanisme à levier excentrique qui agit entre le support (5) et la fixation (1), en particulier un mécanisme à genouillère (27-30).

14. Entraînement auxiliaire selon la revendication 13, **caractérisé en ce que** le mécanisme à genouillère comporte un levier à excentrique pivotant (29) grâce auquel le support (5) est mobile par rapport à la fixation (1).

15. Entraînement auxiliaire selon la revendication 13 ou 14, **caractérisé en ce que** le support (5) est apte à être amené à partir de la position de repos dans la position d'entraînement, à l'encontre de l'action d'un ressort (32) qui est tendu entre le support (5) et la fixation (1).

16. Entraînement auxiliaire selon la revendication 15, **caractérisé en ce que** le support (5) comporte un logement pour ressort intégré (19) qui est destiné à loger quasiment entièrement le ressort (32).

17. Entraînement auxiliaire selon la revendication 16, **caractérisé en ce que** le logement pour ressort (19) est formé dans l'un des éléments de carter (15, 16) du support (5) ou dans les deux.

18. Entraînement auxiliaire selon la revendication 16 ou 17, **caractérisé en ce que** le logement pour ressort (19) est formé dans la zone de base (8) du support (5).

19. Entraînement auxiliaire selon l'une des revendications 1 à 12, **caractérisé en ce que** le mécanisme de déplacement comporte une commande à broche (14) qui agit entre le support (5) et la fixation (1).

20. Entraînement auxiliaire selon la revendication 19, **caractérisé en ce que**
- la commande à broche (14) comporte un moteur à broche (20) pour entraîner une broche de déplacement (21) ;
- et **en ce que** le support (5) comporte un logement pour moteur à broche intégré (19) qui est destiné à loger entièrement le moteur à broche (20).

21. Entraînement auxiliaire selon la revendication 20, **caractérisé en ce que** le logement pour moteur à broche (19) est formé dans l'un des éléments de carter (15, 16) du support (5) ou dans les deux.

22. Entraînement auxiliaire selon la revendication 19 ou 20, **caractérisé en ce que** le logement pour moteur à broche (19) est formé dans la zone de base (8) du support (5).

23. Entraînement auxiliaire selon l'une des revendications 19 à 22, **caractérisé en ce que** le logement pour moteur à broche (19) est complètement fermé par rapport à l'environnement.

24. Entraînement auxiliaire selon l'une des revendications 19 à 23, **caractérisé en ce que** la commande à broche (14) comporte un écrou de broche (22) dans lequel la broche de déplacement (21) est apte à être vissée et qui est tenu par la fixation (1).

25. Entraînement auxiliaire selon la revendication 24, **caractérisé en ce que** la commande à broche (14), avec l'écrou de broche (22) et la broche de déplacement (21) est complètement enfermée, au moins en position de repos, par rapport à l'environnement.

26. Entraînement auxiliaire selon la revendication 24 ou 25, **caractérisé en ce que** la broche de déplacement (21), en position de repos, est vissée dans l'écrou de broche (22) de telle sorte qu'au moins un élément de construction porté par le support (5), en particulier un joint d'étanchéité (25), bute contre un élément de construction tenu par la fixation (1), en particulier contre l'écrou de broche (22).

27. Entraînement auxiliaire selon l'une des revendications 24 à 26, **caractérisé en ce que**
- l'écrou de broche (22) est fermé sur un côté opposé à un côté de vissage prévu pour la broche de déplacement (21) ;
- et **en ce qu'**il est prévu entre le support (5) et la fixation (1) un joint d'étanchéité qui agit au moins dans la position de repos entre ledit support (5) et ladite fixation (1) et qui enferme la broche de déplacement (21) par rapport à l'environnement.

28. Entraînement auxiliaire selon l'une des revendications 13 à 27, **caractérisé en ce qu'**on peut prévoir dans le même espace de construction, au choix, le mécanisme à levier excentrique (27-30) ou l'entraînement à broche (14) sans être obligé de modifier la construction des éléments de carter (15, 16) du support (5).

29. Entraînement auxiliaire selon l'une des revendications 16 à 28, **caractérisé en ce que** le logement pour ressort (19) et le logement pour moteur à broche (19) sont identiques et peuvent être utilisés au choix pour loger le ressort (32) ou le moteur à broche (20).
